# EUROPÄISCHE PATENTSCHRIFT

(11) **EP 1 527 867 B1**
(45) Veröffentlichungstag und Bekanntmachung des Hinweises auf die Patenterteilung: **31.12.2008**
(21) Anmeldenummer: 04021695.4
(22) Anmeldetag: 13.09.2004
(51) Int. Cl.: B29C 45/00, F04D 29/28

(54) **Verfahren zur Herstellung eines Lüfterrades sowie nach diesem Verfahren hergestelltes Lüfterrad**
Method of manufacturing a fan rotor and rotor manufactured according to that method
Procédé de fabrication d'une roue ventilateur et roue ventilateur selon ce procédé

(30) Priorität: 28.10.2003 DE 10350417
(43) Veröffentlichungstag der Anmeldung: 04.05.2005
(73) Patentinhaber: Behr GmbH & Co. KG, 70469 Stuttgart (DE)
(72) Erfinder: Kämmler, Georg, Dr., 70439 Stuttgart (DE)

(56) Entgegenhaltungen:
- DE-A1- 3 015 334
- DE-U- 6 938 710
- US-A- 5 076 760
- US-A- 5 538 395
- US-A- 6 100 611
- PATENT ABSTRACTS OF JAPAN Bd. 017, Nr. 191 (M-1396), 14. April 1993 (1993-04-14) & JP 04 339198 A (AISIN CHEM CO LTD; others: 01), 26. November 1992 (1992-11-26)
- BREITENBACH J ET AL: "DAS MATERIAL DER WAHL FUER BUEROSTUHL-FUSSKREUZE" PLASTVERARBEITER, ZECHNER UND HUETHIG VERLAG GMBH. SPEYER/RHEIN, DE, Bd. 41, Nr. 11, 1. November 1990 (1990-11-01), Seite 126,128,130,13, XP000294786 ISSN: 0032-1338
- LUCIUS W: "PRAKTISCHE ERFAHRUNGEN BEIM SPRITZGIESSEN GLASFASERVERSTAERKTER THERMOPLASTE" KUNSTSTOFFE, MUENCHEN, DE, Bd. 63, Nr. 6, Juni 1973 (1973-06), Seiten 367-372, XP001173367 ISSN: 0023-5563
- PATENT ABSTRACTS OF JAPAN Bd. 004, Nr. 080 (M-015), 10. Juni 1980 (1980-06-10) -& JP 55 040271 A (MATSUSHITA ELECTRIC WORKS LTD), 21. März 1980 (1980-03-21)
- MORITZ U: "FLEXIBLER SPRITZGIESSEN MIT DEM VARIOPRINZIP" KUNSTSTOFFBERATER, KUNSTSTOFF VERLAG. ISERNHAGEN, DE, Bd. 36, Nr. 9, 1. September 1991 (1991-09-01), Seiten 50-51, XP000297682 ISSN: 0172-6374
- BUERKLE E ET AL: "SPRITZGIESSVERARBEITUNG VON LANGGLASFASERVERSTAERKTEM PP" KUNSTSTOFFE, CARL HANSER VERLAG. MUNCHEN, DE, Bd. 93, Nr. 3, 2003, Seiten 47-50, XP001166560 ISSN: 0023-5563
- BASTIAN M ET AL: "ERNST ZU NEHMENDE ALTERNATIVE BEACHTLICHE BAUTEILEIGENSCHAFTER DURCH VARIATION DER PROZESSBEDINGUNGEN BEIM S-LFT-VERFAHREN" KUNSTSTOFFE, CARL HANSER VERLAG. MUNCHEN, DE, Bd. 92, Nr. 2, Februar 2002 (2002-02), Seiten 22-27, XP001083071 ISSN: 0023-5563
- "STEEL STRENGTHENS NYLON TRUCK FAN" MACHINE DESIGN, PENTON,INC. CLEVELAND, US, Bd. 63, Nr. 1, 10. Januar 1991 (1991-01-10), Seite 56, XP000217372 ISSN: 0024-9114
- PATENT ABSTRACTS OF JAPAN Bd. 2003, Nr. 08, 6. August 2003 (2003-08-06) -& JP 2003 094494 A (DENSO CORP), 3. April 2003 (2003-04-03)

## Beschreibung

Die Erfindung betrifft ein Verfahren zur Herstellung eines Lüfterrades, insbesondere für ein Kraftfahrzeug, gemäß dem Oberbegriff des Anspruchs 1.

Axial- oder Mantel-Lüfter für Lastkraftwagen werden herkömmlicher Weise auf Grund der mechanischen und thermischen Belastungen aus PA6 mit Glasfasern als Füllstoff hergestellt. Ein Nachteil von PA6 ist, dass es Wasser aufnimmt, welches eine starke Änderung mechanischer Kennwerte mit sich bringt, das heißt, die Lüfterräder müssen immer auf den Bereich der maximalen Wasseraufnahme ausgelegt werden, wodurch es zu Überdimensionierungen kommen kann. Ferner weist PA6 eine relativ hohe Dichte auf, so dass die Lüfterräder relativ schwer sind, was unter anderem zu Nachteilen bei der Wuchtgüte und für die Beschleunigung des jeweiligen Lüfterrades im Fahrbetrieb führt. Derartige Lüfterräder werden üblicherweise spritzgegossen, wofür die Gussmasse über mehrere Anschnittspunkte eingespritzt wird.

Aus der JP2003094494ist ein Spritzgießverfahren zur Herstellung eines Lüfters bekannt. Der Lüfter weist einen ringförmigen Außenteil und eine Radnabe im Inneren auf. Der Lüfter weist eine Mehrzahl von Flügeln auf, die mit dem Ringteil und der Radnabe verbunden sind. Die Verbindung von benachbarten Flügelteilen weist am ringförmigen Außenteil einen Bereich mit einem vergrößerten Querschnitt auf.

Aus dem Artikel "praktische Erfahrungen beim Spritzgießen glasfaserverstärkter Thermoplaste"(Kunststoffe, Band 63, 1973, Heft 6) ist ein Spritzgießverfahren von glasfaserverstärkten thermoplastischen Formmassen bekannt.

Aus dem Artikel "steel strengthens nylon truck fan" (Machine desion, penton, Inc. Cleveland, USA, Band 63, Nr. 1, 10, Januar 1991, Seite 56) ist ein Spritzgießverfahren zur Herstellung eines Nkw-Lüfters mit Glasfasern bekannt.

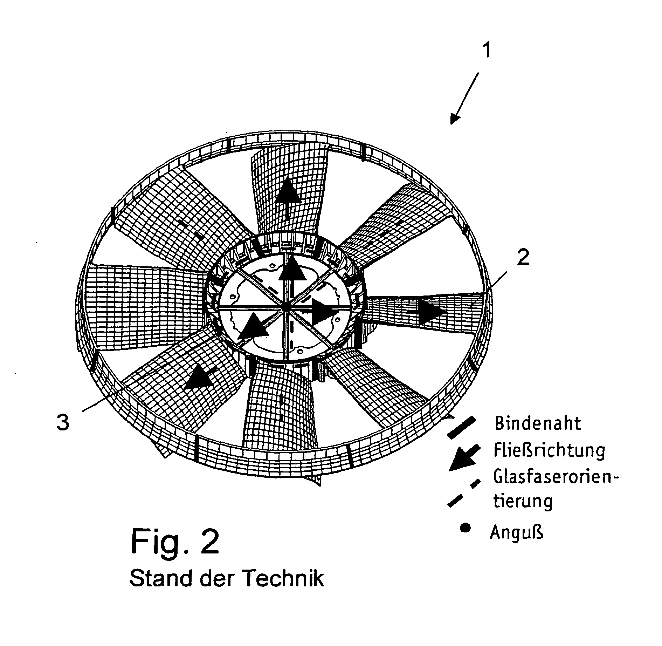

In Fig. 2 ist ein herkömmliches Lüfterrad 1 (Düsen-Mantel-Lüfter) dargestellt. Zur Herstellung desselben wird über mehrere Anschnittspunkte Kunststoff in die Form eingespritzt. Die Kunststoffmasse füllt zuerst den inneren Ring 3, anschließend die Lüfterradflügel 2 und zum Schluss den äußeren Ring. Zur optimierten Füllung der Lüfterradflügel 2 ist jedem Lüfterradflügel 2 ein Anschnittspunkt zugeordnet, wodurch sich am inneren Ring 3, wie auch am äußeren Ring Bindenähte zwischen den einzelnen Lüfterradflügeln 2 ergeben.

Ein nach diesem bekannten Verfahren hergestelltes Lüfterrad lässt, insbesondere in Hinblick auf die Festigkeit, noch Wünsche offen.

Es ist Aufgabe der Erfindung, ein verbessertes Verfahren zur Herstellung eines Lüfterrades zur Verfügung zu stellen.

Diese Aufgabe wird gelöst durch ein Verfahren zur Herstellung eines Lüfterrades mit den Merkmalen des Anspruchs 1. Vorteilhafte Ausgestaltungen sind Gegenstand der Unteransprüche.

Erfindungsgemäß ist ein Verfahren zur Herstellung eines Lüfterrades, insbesondere ein Axial- oder Düsenmantel-Lüfter für ein Kraftfahrzeug, vorgesehen, wobei das Lüfterrad mittels Spritzgießens eines mit Glasfasern versehenen Kunststoffes hergestellt und dabei die Gussmasse über einen Ring-oder Schirmanguss eingegossen wird. Auf Grund des Ring- oder Schirmangusses erfolgt ein gleichmäßiges Einströmen der Gussmasse über den gesamten Umfang des Lüfterrades ohne die Ausbildung von Bindenähten am inneren Ring, wodurch sich die Festigkeit vergrößert.

Bevorzugt wird Polypropylen als Gussmasse verwendet, jedoch kann auch PA6 oder ein anderer Kunststoff verwendet werden. Bei Verwendung des üblicherweise verwendeten Werkstoffs PA6 kann die zulässige Nenndrehzahl erhöht werden, um einen größeren Massenluftstrom und somit eine größere Kühlleistung zu erreichen, so dass die erforderliche Überdimensionierungen auf Grund der Wasseraufnahme etwas ausgeglichen werden kann.

Alternativ können auch Mischungen verschiedener Kunststoffe verwendet werden, wie insbesondere PPE/PA (Polyphenylenoxyd/Polyamid) oder PPO/PP (Polyphenylenether/Polypropylen) gefertigt ist.

Die Gussmasse weist bevorzugt Füllstoffe, insbesondere Glasfasern, bevorzugt mit Längen von über 1 mm, auf. Diese richten sich beim Spritzgießen mit deutlicher Tangentialorientierung im inneren Ringbereich aus.

Im Falle einer Direktcompoundierung ist eine sehr schonende Einbringung von Faserlängen über 1 mm problemlos möglich, so dass weitere Festigkeitssteigerungen möglich sind, insbesondere bei der Verwendung von Polypropylen mit Glasfasern als Füllstoff. Prinzipiell kann auch Langfaser-Granulat im Spritzgießprozess verarbeitet werden, jedoch ist eine Direktcompoundierung zu bevorzugen.

Im Folgenden wird die Erfindung anhand eines Ausführungsbeispiels unter Bezugnahme auf die Zeichnung näher erläutert. Es zeigen:
- Fig.: 1 ein Lüfterrad gemäß dem Ausführungsbeispiel, und
- Fig. 2: ein herkömmliches Lüfterrad.

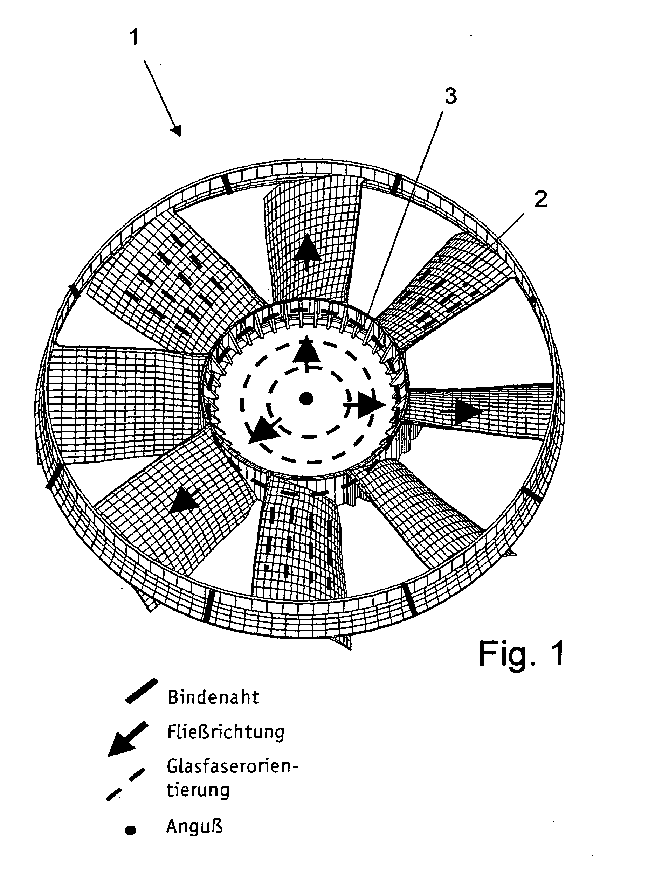

Fig. 1 zeigt ein Lüfterrad 1, vorliegend ein Düsen-Mantel-Lüfter (DML), das einen umspritzten, metallischen Flanschring (nicht sichtbar in Fig. 1, vgl. aber Fig. 2) aufweist, der die Momente aufnimmt. Ein daran anschließender, geschlossener Kunststoffring, im Folgenden auch als innerer Ring 3 bezeichnet, an dem sich Lüfterflügel 2 anschließen, dient dazu, das Lüfterrad 1 insbesondere gegen Bersten zu stabilisieren. Die Herstellung erfolgt mittels Spritzgießens, wobei ein Ring- oder Schirmanguss vorgesehen ist, so dass die Gussmasse über den gesamten Umfang gleichmäßig und gleichzeitig einströmt, ohne dass sich Bindenähte bilden (siehe Fig. 1), wie sie bei auf herkömmliche Weise hergestellten Lüfterrädern auftreten. Nach erfolgtem Spritzgießen wird der Ring- oder Schirmanguss entfernt.

Der erfindungsgemäß vorgesehene Ring- oder Schirmanguss hat zum Einen den Vorteil, dass Bindenähte im inneren Kunststoffring 3 verhindert werden und dieser dadurch erheblich gestärkt wird, und zum Anderen den Vorteil, dass durch den Schirmanguss eine deutliche Tangentialorientierung sowohl der Schmelze als auch der in der Schmelze enthaltenen Füllstoffe erfolgt, so dass ein zusätzlicher Verstärkungseffekt vorliegt. Da die Schmelze beim Eintritt in die Lüfterflügel 2 ihre Strömungsrichtung ändert, entsteht gleichzeitig eine Umorientierung der Schmelze und der Füllstoffe in Zugrichtung der anschließenden Lüfterflügel und damit eine weitere beanspruchungsgerechte Festigkeitssteigerung des gesamten Lüfterrades 1.

Als Werkstoff wird Polypropylen mit langen Glasfasern (insbesondere mit einer Länge von mehr als 1 mm) als Füllstoff verwendet, so dass die Werkstoffkosten gesenkt werden können. Auf Grund der geringeren Dichte von Polypropylen gegenüber dem üblicherweise verwendeten PA6 wird auch das Gesamtgewicht des Lüfterrades 1 verringert.

## Patentansprüche

1. Verfahren zur Herstellung eines Lüfterrades (1) für ein Kraftfahrzeug, das mittels Spritzgießens eines mit Glasfasern versehenen Kunststoffes hergestellt wird, wobei ein Metallring gleichmäßig umspritzt wird, **dadurch gekennzeichnet, dass** die Gussmasse über einen Ring- oder Schirmanguss eingegossen wird, wobei Glasfasern mit einer Länge von über 1 mm verwendet werden und eine Direktcompoundierung erfolgt.

2. Verfahren nach Anspruch 1, **dadurch gekennzeichnet, dass** PA6 oder Polypropylen als Gussmasse verwendet wird.

3. Verfahren nach Anspruch 1 oder 2, **dadurch gekennzeichnet, dass** als Füllstoff in der Gussmasse Glasfasern verwendet werden.

4. Lüfterrad für ein Kraftfahrzeug, wobei das Lüfterrad (1) nach einem Verfahren gemäß einem der Ansprüche 1 bis 3 hergestellt ist, wobei die Gussmasse eine Längsorientierung im Lüfterflügelbereich aufweist und ein Metallring in radialer Richtung bindenahtfrei zumindest teilweise von der Gussmasse umgeben ist.

5. Lüfterrad nach Anspruch 4, **dadurch gekennzeichnet, dass** das Lüfterrad (1) aus PA6, Polypropylen oder aus den Mischungen PPE/PA oder PPO/PP gefertigt ist.

6. Lüfterrad nach Anspruch 4 oder 5, **dadurch gekennzeichnet, dass** das Lüfterrad (1) Glasfasern als Füllstoff aufweist.

7. Lüfterrad nach einem der Ansprüche 4 bis 6, **dadurch gekennzeichnet, dass** die Gussmasse eine Tangentialorientierung im Ringbereich aufweist.

## Claims

1. Method for manufacturing a fan rotor (1) for a motor vehicle, which is produced by injection moulding a plastic containing glass fibres, such that a metal ring is uniformly encapsulated by the injected material, **characterised in that** the cast mass is injected through an annular or screen-type gate, glass fibres of length exceeding 1 mm are used, and direct compounding takes place.

2. Method according to Claim 1, **characterised in that** PA6 or polypropylene is used as the cast mass.

3. Method according to Claims 1 or 2, **characterised in that** glass fibres are used as a filler in the cast mass.

4. Fan rotor for a motor vehicle, such that the fan rotor (1) is made by a method according to any of Claims 1 to 3, such that the cast mass has a longitudinal orientation in the fan blade area and a metal ring is surrounded at least partially by the cast mass in the radial direction without any joint seam.

5. Fan rotor according to Claim 6, **characterised in that** the fan rotor (1) is made from PA6, polypropylene, or the mixtures PPE/PA or PPO/PP.

6. Fan rotor according to Claims 4 or 5, **characterised in that** the fan rotor (1) contains glass fibres as a filler.

7. Fan rotor according to any of Claims 4 to 6, **characterised in that** the cast mass **has a tangential orientation in the ring area.**

## Revendications

1. Procédé de fabrication d'une roue de ventilateur (1) pour un véhicule automobile, roue qui est fabriquée par moulage par injection d'une matière plastique comportant des fibres de verre, où une bague métallique est enrobée par injection, de façon uniforme,
**caractérisé en ce que** le mélange de coulage est versé par une entrée annulaire ou en voûte, où l'on utilise des fibres de verre de plus de 1 mm, et il se produit une composition directe.

2. Procédé selon la revendication 1, **caractérisé en ce que** l'on utilise, comme mélange de coulage, du polyamide type PA6 ou du polypropylène.

3. Procédé selon la revendication 1 ou 2, **caractérisé en ce que** l'on utilise des fibres de verre servant de matière de remplissage dans le mélange de coulage.

4. Roue de ventilateur pour un véhicule automobile, où la roue de ventilateur (1) est fabriquée conformément à l'une quelconque des revendications 1 à 3, où le mélange de coulage présente une orientation longitudinale dans la zone de l'ailette du ventilateur, et une bague métallique est entourée au moins partiellement par le mélange de coulage, sans joint collé, dans la direction radiale.

5. Roue de ventilateur selon la revendication 4, **caractérisée en ce que** la roue de ventilateur (1) est fabriquée en polyamide type PA6, en polypropylène ou bien avec des mélanges de polyphénylène éther / de polyamide (PPE / PA) ou de polyoxyphénylène / de polypropylène (PPO / PP).

6. Roue de ventilateur selon la revendication 4 ou 5, **caractérisée en ce que** la roue de ventilateur (1) présente des fibres de verre servant de matière de remplissage.

7. Roue de ventilateur selon l'une quelconque des revendications 4 à 6, **caractérisée en ce que** le mélange de coulage présente une orientation tangentielle dans la zone annulaire.
